# EUROPÄISCHE PATENTSCHRIFT

(11) **EP 2 619 447 B1**
(45) Veröffentlichungstag und Bekanntmachung des Hinweises auf die Patenterteilung: **18.11.2015**
(21) Anmeldenummer: 11758125.6
(22) Anmeldetag: 05.09.2011
(51) Int. Cl.: F03D 1/06, F03D 11/00

(54) **BLATTANSCHLUSS EINES ROTORBLATTS EINER WINDENERGIEANLAGE**
BLADE CONNECTION OF A ROTOR BLADE OF A WIND TURBINE
RACCORD DE PALE D'UNE PALE DE ROTOR D'UNE INSTALLATION ÉOLIENNE

(30) Priorität: 24.09.2010 DE 202010013535 U
(43) Veröffentlichungstag der Anmeldung: 31.07.2013
(73) Patentinhaber: Senvion GmbH, 22297 Hamburg (DE)
(72) Erfinder: ZELLER, Lenz, Simon, 24242 Felde (DE); WERNER, Markus, 24103 Kiel (DE)
(74) Vertreter: Grebner, Christian Georg Rudolf
(86) Internationale Anmeldenummer: PCT/EP2011/004459
(87) Internationale Veröffentlichungsnummer: WO 2012/038034

(56) Entgegenhaltungen:
- EP-A1- 1 486 415
- EP-A2- 0 057 272
- WO-A2-01/42647
- DE-A1-102008 021 498
- DE-A1-102008 045 939
- US-A- 4 420 354
- US-A1- 2008 206 059

## Beschreibung

Die Erfindung betrifft einen Befestigungskörper für die Anordnung in einer Aufnahme eines Rotorblattanschlusses eines Rotorblatts, wobei die Aufnahme am rotornabenseitigen Ende des, vorzugsweise flanschfreien, Rotorblatts ausgebildet ist, wobei der Befestigungskörper in der Aufnahme zwischen einer inneren Befestigungsseite und einer äußeren Befestigungsseite des Rotorblatts angeordnet wird oder ist und der Befestigungskörper mit der inneren Befestigungsseite und der äußeren Befestigungsseite des Rotorblatts verbunden wird oder ist, wobei der Befestigungskörper in seiner Längserstreckung verjüngend ausgebildet ist. Ferner betrifft die Erfindung einen Rotorblattanschluss einer Windenergieanlage zur Verbindung eines Rotorblatts mit einer Rotornabe.

Rotorblattanschlüsse zur Verbindung eines Rotorblatts mit einer Anschlussvorrichtung sind beispielsweise aus WO 01/42647 A2 sowie aus WO 2007/131589 A2 bekannt.

Ferner ist in DE 296 18 525 U1 ein Blattflansch für Rotorblätter von Windkraftanlagen beschrieben.

Darüber hinaus ist bekannt, dass bei errichteten Windenergieanlagen aufgrund der exponierten Position der Windenergieanlagen ein beträchtliches Blitzschlagrisiko besteht. Dabei sind vor allem bei Blitzeinschlägen an einer Windenergieanlage die Rotorblätter gefährdet, wobei von den Rotorblättern bei einem Blitzschlag die elektrische Energie eines Blitzes über eine Rotornabe, eine Gondel und einen Turm der Windenergieanlage in den Untergrund abgeleitet wird. Hierbei sind zur Ableitung der Blitzenergie Übergangseinrichtungen erforderlich, die eine Drehbewegung des Rotors zulassen und gleichzeitig eine Überleitung der elektrischen Energie eines Blitzes gewährleisten.

Beispielsweise ist in DE 10 2004 010 104 A1 eine Blitzschutzeinrichtung für Windenergieanlagen bekannt, wobei die Windenergieanlage über eine Blitzableiteranlage zur Ableitung elektrischer Energie eines eingeschlagenen Blitzes in einen Untergrund, auf dem ein Turm der Windenergieanlage befestigt ist, vorgesehen ist.

Darüber hinaus ist in DE 10 2005 017 865 B4 eine Windenergieanlage mit einer Blitzstromableiteinrichtung beschrieben.

Aus US 2008/0206059 A1 ist ein Verfahren zur Herstellung eines Schalenelements eines Windturbinenblatts mit einem Befestigungselement zum Verbinden des Rotorblatts an der Rotorblattwurzel gezeigt. Das Befestigungselement wird gemeinsam mit vorgefertigten Stäben, aus denen die Rotorblattschale hergestellt wird, positioniert und in einem Harzinfusionsverfahren vergossen. Zum Schutz vor Blitzeinschlägen ist eine Blitzübertragungseinrichtung vorgesehen, welche aus einem Bogen oder einer Platte eines leitfähigen Materials hergestellt ist und mit einem im des Rotorblatts verlaufenden Blitzschutzleiter verbunden ist.

Ausgehend von diesem Stand der Technik besteht die Aufgabe der Erfindung darin, ein Rotorblatt mit einem Rotorblattanschluss zur Verbindung des Rotorblatts mit einer Rotornabe einer Windenergieanlage unter Verwendung eines Befestigungskörpers sowie die Verwendung eines Befestigungskörpers anzugeben, wobei an einem, vorzugsweise metallflanschfreien, Rotorblattanschluss eines Rotorblatts auf einfache Weise bei einem Blitzeinschlag an einer Windenergieanlage die Energie des Blitzes von dem Rotorblatt übertragen und die Energie über die Rotornabe, die Gondel und den Turm der Windenergieanlage in den Untergrund abgeleitet werden soll.

Gelöst wird die Aufgabe durch ein Rotorblatt mit einem Rotorblattanschluss zur Verbindung des Rotorblatts mit einer Rotornabe einer Windenergieanlage unter Verwendung eines Befestigungskörpers, wobei der Befestigungskörper zur Anordnung in einer Aufnahme des Rotorblattanschlusses des Rotorblatts vorgesehen ist und wobei die Aufnahme am rotornabenseitigen Ende des, vorzugsweise flanschfreien, Rotorblatts ausgebildet ist, wobei der Befestigungskörper in der Aufnahme zwischen einer inneren Befestigungsseite und einer äußeren Befestigungsseite des Rotorblatts angeordnet wird oder ist und der in der Aufnahme eingebrachte Befestigungskörper mit der inneren Befestigungsseite und der äußeren Befestigungsseite des Rotorblatts verbunden wird oder ist, wobei der Befestigungskörper in seiner Längserstreckung verjüngend ausgebildet ist, wobei der Befestigungskörper quer, insbesondere senkrecht, zur Längserstreckung einen Anschluss für einen Blitzschutzleiter des Rotorblatts aufweist, wobei der Befestigungskörper dadurch fortgebildet ist, dass der Befestigungskörper an seiner der Rotorblattinnenseite zugewandten Kopfseite eine Vertiefung, insbesondere Bohrung, zum Aufnehmen eines aus der Kopfseite des Befestigungskörpers vorspringenden Anschlussstückes aufweist, wobei das Anschlussstück mit dem Ende des Blitzschutzleiters verbunden wird oder ist.

Gemäß der Erfindung ist vorgesehen, bei einem Rotorblatt, das keinen Stahlflansch zur Befestigung an einer Rotornabe aufweist, die Blitzenergien über ein Blitzschutzkabel im Rotorblatt durch Verbindung mit einem Befestigungskörper am Rotorblattanschluss zu übertragen, wobei der mit dem Blitzschutzkabel verbundene Befestigungskörper mit einem Rotorblattlager zur Ableitung der elektrischen Energie eines eingeschlagenen Blitzes in den Untergrund verbunden ist.

Hierbei verfügt die Windenergieanlage über einen Turm zur Befestigung auf einen Untergrund, wobei auf dem Turm eine Gondel angeordnet ist, an der ein Rotor mit einer Rotornabe und mit der Rotornabe verbundenen Rotorblättern drehbar angeordnet ist. Der Rotor, bestehend aus der Rotornabe und den daran angeordneten Rotorblättern, treibt einen in der Gondel angeordneten Generator an. Insbesondere wird unter einer Gondel ein Gehäuse verstanden, in dem auf dem Turm angeordnete Komponenten der Windenergieanlage untergebracht sind. Hierbei sind üblicherweise ein Generator sowie ein Getriebe, eine Antriebswelle und eine Steuereinrichtung sowie Trageinrichtungen für die genannten Komponenten in der Gondel angeordnet.

Der flanschfreie, d.h. ohne einen (Verbindungs-)Flansch ausgebildete Rotorblattanschluss eines Rotorblatts weist dabei vorzugsweise äquidistant angeordnete Befestigungskörper zur Befestigung des Rotorblattanschlusses an der Rotornabe auf, wobei die Befestigungskörper ringförmig am Ende des Rotorblatts angeordnet sind. Hierbei sind die stückig oder einstückig ausgebildeten Befestigungskörper in eine rotornabenseitige Aufnahme des Rotorblattanschlusses angeordnet, wobei die Befestigungskörper an der Anschlussseite mit dem Rotorblatt verbunden, insbesondere verklebt, werden.

Insbesondere ist der Rotorblattanschluss mit der Aufnahme für die Befestigungskörper kreisbogenförmig als ein geschlossener Kreis oder ein Segment davon ausgebildet.

Im Rahmen der Erfindung ist dabei vorgesehen, dass der Befestigungskörper formkomplementär zu der rotornabenseitigen Aufnahme des Rotorblatts ausgebildet ist.

Gemäß der Erfindung ist vorgesehen, dass durch den vom Befestigungskörper abgesetzten Anschluss, beispielsweise in Form einer als Anschlusskörper ausgebildeten Erhöhung, das Blitzschutzkabel des Rotorblatts bzw. der Blitzschutzleiter des Rotorblatts mit dem Befestigungskörper elektrisch leitend verbunden ist.

Darüber hinaus ist in einer Weiterbildung vorgesehen, dass der Anschluss für den Blitzschutzleiter des Rotorblatts an der Innenseite des Rotorblatts angeordnet wird oder ist.

Des Weiteren ist es bevorzugt, dass der Befestigungskörper und der Anschluss für den Blitzschutzleiter des Rotorblatts elektrisch leitend sind und/oder aus Metall, vorzugsweise Stahl, bestehen. Hierdurch wird eine niederohmige Verbindung für die Ableitung der elektrischen Energie eines eingeschlagenen Blitzes in den Untergrund ausgebildet, wobei der Blitzableiter von den Rotorblättern über die Rotornabe, Gondel zum Turm in den Untergrund des Turms führt. Des Weiteren ist es günstig, wenn der Anschluss eine elektrisch leitende Verbindung zwischen den im Inneren des Rotorblatts angeordneten Blitzschutzleiter und dem gegenüber dem Blitzschutzleiter isolierten Befestigungskörper ausbildet. Hierbei ist der Befestigungskörper beispielsweise zwischen einer inneren Lage und einer äußeren Lage eines Verbindungsmaterials des Rotorblattanschlusses am rotornabenseitigen Ende des Rotorblatts angeordnet. Dabei besteht bevorzugterweise das Verbindungsmaterial aus einem Glasfasermaterial (z.B. GFK), das beispielsweise mit Harz getränkt ist und mit anderen Elementen verbunden ist. Hierbei wird der Befestigungskörper zwischen der inneren Lage und der äußeren Lage, durch die eine Aufnahme für den Befestigungskörper am Rotorblattanschluss ausgebildet wird, angeordnet.

Vorzugsweise sind oder werden der Anschluss und der Befestigungskörper lösbar miteinander verbunden.

Dazu ist in einer weiteren Ausgestaltung vorgesehen, dass der Befestigungskörper in der Aufnahme des Rotorblatts am Rotorblattanschluss mit dem Rotorblatt oder dem Rotorblattanschluss verklebt wird oder verbunden ist.

Des Weiteren zeichnet sich eine bevorzugte Ausgestaltung des Befestigungskörpers dadurch aus, dass der Befestigungskörper in einer ringförmigen Aufnahme des Rotorblattanschlusses eingesetzt wird oder ist, wobei insbesondere mehrere Befestigungskörper äquidistant ringförmig am Rotorblattanschluss angeordnet sind und wobei insbesondere zwischen zwei Befestigungskörpern jeweils ein Abstandskörper angeordnet ist oder wird. Durch die Abstandskörper werden die ringförmig in der Aufnahme oder des Aufnahmeraums des Rotorblattanschlusses angeordneten Befestigungskörper voneinander beabstandet.

Dazu ist weiter vorgesehen, dass der Befestigungskörper an seinem rotornabenseitigen Ende einen im Wesentlichen viereckigen, vorzugsweise rechteckigen oder quadratischen Querschnitt in der Anschlussebene zur Rotornabe aufweist. In Längserstreckung ist der Befestigungskörper mit einem vorzugsweise trapezförmigen Querschnitt ausgebildet, wobei der Befestigungskörper in seiner Längserstreckung eine zur kreisbogenförmigen Aufnahme radial innere verjüngte Seite aufweist, an der der Anschluss für das Blitzschutzkabel oder den Blitzschutzleiter des Rotorblatts angeordnet ist oder wird.

Weiterhin ist im Rahmen der Erfindung vorgesehen, dass die in der kreisbogenförmigen oder ringförmigen Aufnahme des Rotorblattanschlusses angeordneten Befestigungskörper und Abstandskörper, vorzugsweise durch Laminieren, miteinander verbunden sind.

Überdies ist vorgesehen, dass die Befestigungskörper zur Verbindung mit der Rotornabe ein Bolzenloch, vorzugsweise mit einem Innenschraubgewinde, aufweist, um Verbindungselemente bzw. Verbindungsbolzen bei Verbindungen des Rotorblatts mit der Rotornabe aufzunehmen, wodurch das Rotorblatt mit der Rotornabe verbunden wird.

Des Weiteren zeichnet sich der Befestigungskörper in einer Ausgestaltung dadurch aus, dass der Befestigungskörper in Längserstreckung auf der der Rotornabe zugewandten, vorzugsweise quadratischen, Seite eine Bohrung zur Aufnahme eines Bolzens aufweist.

Außerdem ist es bevorzugt, wenn auf der der Rotornabe zugewandten Seite des oder der Befestigungskörper ein Ring, insbesondere ein Blitzschutzring, angeordnet wird oder ist, wodurch eine elektrische Verbindung zwischen dem Blitzschutzkabel oder dem Blitzschutzleiter des Rotorblatts und der Rotornabe über den Anschluss am Befestigungskörper und den Befestigungskörper sowie den Blitzschutzring ausgebildet wird.

Darüber hinaus wird die Aufgabe gelöst durch einen Rotorblattanschluss einer Windenergieanlage zur Verbindung eines Rotorblatts mit einer Rotornabe unter Verwendung wenigstens eines Befestigungskörpers, wobei der Befestigungskörper wie voranstehend beschrieben ausgebildet ist.

Weiterhin wird die Aufgabe gelöst durch eine Verwendung eines Befestigungskörpers, wie voranstehend beschrieben, in einem Rotorblatt zum Anordnen in einer Aufnahme eines Rotorblattanschlusses eines Rotorblatts. Zur Vermeidung von Wiederholungen wird auf die voranstehenden Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in schematischer dreidimensionaler Darstellung gemäß dem Stand der Technik,
- Fig.2a: schematisch im Ausschnitt einen Teil eines Rotorblattanschlusses in einer Seitenansicht,
- Fig. 2b: schematisch einen Längsschnitt durch einen erfindungsgemäßen Befestigungskörper im Bereich des Rotorblattanschlusses und
- Fig. 2c: eine perspektivische Darstellung des Befestigungskörpers.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

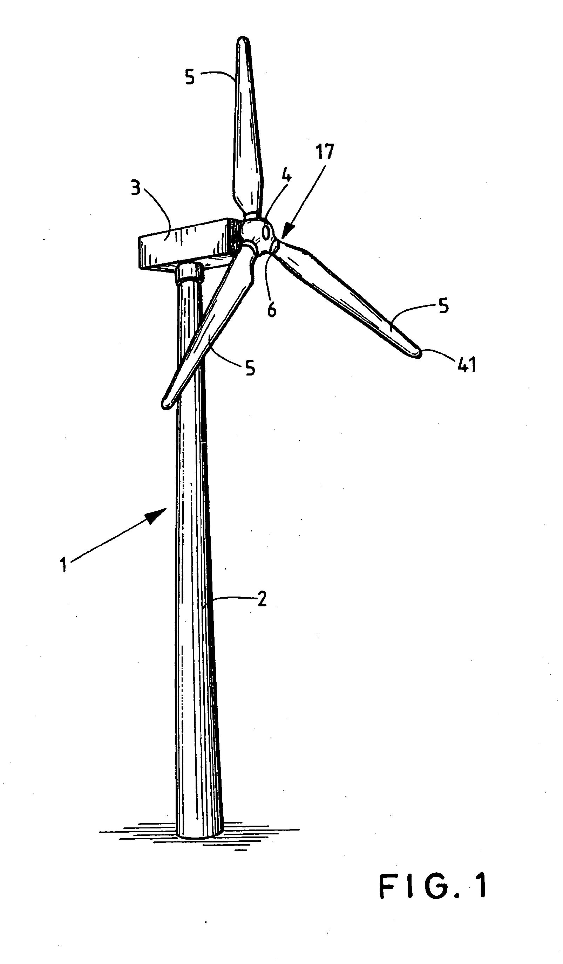

Fig. 1 zeigt eine schematische dreidimensionale Darstellung einer Windenergieanlage 1 gemäß dem Stand der Technik. Die Windenergieanlage 1 umfasst einen auf einem Untergrund errichteten Turm 2, auf dem ein Turmkopf 3 aufgebracht ist, der üblicherweise einen nicht dargestellten Generator aufweist. Es ist ferner eine Rotornabe 4 dargestellt, an der Rotorblätter 5 an der Blattwurzel 6 mit der Rotornabe 4 verbunden sind. Die Rotorblätter 5 verfügen jeweils über einen Rotorblattanschluss 17 und eine Rotorblattspitze 41.

Die Rotornabe 4 ist unter Verwendung von hier nicht dargestellten Schraubverbindungen über einen Flansch und einen Generatorschaft mit einem Generator verbindbar.

Die vorzugsweise ohne Flansch ausgebildeten Rotorblätter 5 sind an den Blattwurzeln 6 mit der Rotornabe 4 verbunden. Zur Verbindung sind dabei Schrauben vorgesehen, wobei entsprechende Löcher bzw. Bohrungen in dem jeweiligen Material vorgesehen sind, um eine Verbindung zu ermöglichen. Zum Festziehen der Muttern sind entsprechende Öffnungen in der Rotornabe 4 vorgesehen. Durch das Festziehen der Muttern wird eine Vorspannung erzeugt.

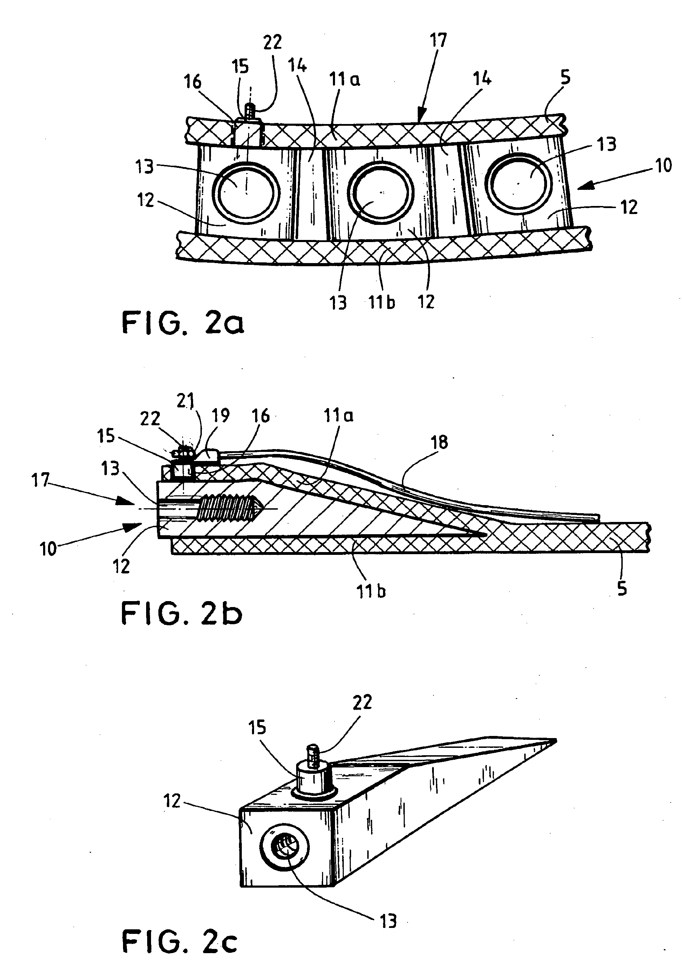

Fig. 2a zeigt schematisch eine Ansicht des Rotorblattanschlusses 17 des Rotorblatts 5 in einer Seitenansicht im Ausschnitt. In Fig. 2b ist ein Querschnitt durch den Rotorblattanschluss 17 schematisch dargestellt.

Der Rotorblattanschluss 17 ist Teil des Rotorblatts 5. Das Rotorblatt 5 ist auf per se bekannte Weise aus einem verstärkten Material, insbesondere Glasfasermaterial hergestellt, wobei am rotornabenseitigen Ende des Rotorblattanschlusses 17 ein Aufnahmebereich 10 ausgebildet ist, wobei das Rotorblatt 5 als Rotorblattanschluss 17 zwei Schenkel 11a, 11 b (im Querschnitt, vgl. Fig. 2b) aufweist, wobei die Schenkel 11a, 11 b des Rotorblattanschlusses 17 aus demselben Material, insbesondere Glasfasermaterial (GFK), wie das Rotorblatt 5 hergestellt sind. Durch die Verzweigung der Schenkel 11 a, 11 b wird der ringförmige oder kreisförmige Aufnahmeraum 10 als Aufnahme für zwischen den Schenkeln 11 a, 11 b einzusetzende Befestigungskörper 12 ausgebildet.

In dem ringförmigen Aufnahmeraum 10 sind mehrere Befestigungskörper 12 nebeneinander angeordnet. Die Befestigungskörper 12 sind in der gezeigten Stirnansicht (vgl. Fig. 2a) quadratisch oder blockartig ausgebildet. Die Befestigungskörper 12 weisen eine Bohrung 13 mit einem Innengewinde zum Einsetzen bzw. Einschrauben eines Bolzens oder einer Befestigungsschraube auf.

In Umfangsrichtung des ringförmig ausgebildeten Rotorblattanschlusses 17 ist zwischen zwei Befestigungskörpern 12 jeweils ein Abstandskörper 14 angeordnet, wobei die Abstandskörper 14 und die Befestigungskörper 12 an ihren Nachbarseiten miteinander verbunden sind. Beispielsweise wird zwischen den Befestigungskörpern 12 und den Abstandskörpern 14 Harz eingebracht, so dass nach Aushärten des Harzes die Befestigungskörper 12 und die Abstandskörper 14 miteinander verbunden sind.

Der Aufnahmeraum 10 bzw. die Aufnahmen für die Befestigungskörper 12 und die Abstandskörper 14 sind in Längserstreckung des Rotorblatts 5 im Querschnitt trapezförmig (vgl. Fig. 2b) ausgebildet, wobei in den Aufnahmeraum 10 formkomplementäre Befestigungskörper 12 in den Aufnahmeraum 10 aufgenommen oder eingesetzt werden.

Der zur Innenseite des Rotorblatts 5 ausgebildete innere Schenkel 11 a bildet die innere Befestigungsseite des Rotorblatts 5 und der äußere Schenkel 11b bildet die äußere Befestigungsseite des Rotorblatts 5, wobei der oder die in den Aufnahmeraum 11 eingebrachten Befestigungskörper 12 beispielsweise durch Aufbringen von Harz oder Einbringen von Harz zwischen den Kontaktflächen der Befestigungskörper 12 mit den Kontaktflächen des Aufnahmeraums 10 miteinander durch Verkleben verbunden werden oder sind.

Darüber hinaus ist aus Fig. 2b sowie aus der perspektivischen Darstellung in Fig. 2c erkennbar, dass der Befestigungskörper 12 in seiner Längserstreckung an der Spitze verjüngend ausgebildet ist. An der zur Innenseite des Rotorblatts 5 weisenden Kopfseite ist der Befestigungskörper 12 mit einem aus der Kopfseite des Befestigungskörpers 12 herausragenden Anschlusskörper 15 ausgebildet, der in eine Durchbrechung im inneren Schenkel 11a eingesetzt ist.

Der Anschlusskörper 15 ist dabei wie der Befestigungskörper 12 aus Metall, vorzugsweise Stahl, hergestellt, so dass der Anschlusskörper 15 und der Befestigungskörper 12 elektrisch leitend sind.

Zur Aufnahme des Anschlusskörpers 15 ist an dem inneren Schenkel 11 a eine Durchbrechung oder ein Loch 16 (vgl. Fig. 2a) ausgebildet, in das der Anschlusskörper 15 eingesetzt wird, nachdem der Befestigungskörper 12 in den Aufnahmeraum 10 zwischen den Schenkeln 11a und 11b angeordnet worden ist. Anschließend wird der Anschlusskörper 15 von der Innenseite des Rotorblatts 5 beispielsweise durch Einschrauben in eine an der Kopfseite des Befestigungskörpers 12 ausgebildete (hier nicht dargestellt) Bohrung verbunden.

Das Rotorblatt 15 verfügt weiterhin über eine Blitzschutzeinrichtung, wobei die Blitzschutzeinrichtung ein Blitzschutzleiterkabel 18 im Inneren des Rotorblatts 5 aufweist, um bei einem Blitzeinschlag in das Rotorblatt 5 die elektrische Energie des Blitzes in den Untergrund abzuleiten. Hierzu ist am Ende des Blitzschutzleiterkabels 18 ein Verbindungsstück 19, beispielsweise in Form eines Kabelschuhs oder dergleichen, angeordnet, das auf den Anschlusskörper 15 aufgelegt wird, wobei der Anschlusskörper 15 einen Schraubenkörper 22 aufweist, so dass nach Anordnung des Verbindungsstücks 19 auf dem Anschlusskörper 15 durch Anziehen einer Schraubenmutter 21 das Verbindungsstück 19 mit dem Anschlusskörper 15 verbunden wird.

Bei Verbindung des Rotorblatts 5 mit der Rotornabe wird an der Kontaktseite des Rotorblattanschlusses 17 ein elektrisch leitfähiger Ring im Bereich der Befestigungskörper 12 angeordnet, wobei der flanschartige elektrisch leitfähige Ring z.B. aus Metall als Blitzschutzring ausgebildet ist. Durch die Anordnung des mit Bohrungen versehenen Rings auf den Befestigungskörpern 12 ist es möglich, durch Einbringen von Bolzen in die Bohrungen 13 der Befestigungskörper 12 das Rotorblatt 5 mit der Rotornabe zu verbinden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Windenergieanlage
- 2: Turm
- 3: Turmkopf
- 4: Rotornabe
- 5: Rotorblatt
- 6: Blattwurzel
- 10: Aufnahmebereich
- 11a, 11b: Schenkel
- 12: Befestigungskörper
- 13: Bohrung
- 14: Abstandskörper
- 15: Anschlusskörper
- 16: Bohrung
- 17: Rotorblattanschluss
- 18: Blitzschutzkabel
- 19: Verbindungsstück
- 21: Schraubenmutter
- 22: Schraubenkörper
- 41: Rotorblattspitze

## Patentansprüche

1. Rotorblatt (5) mit einem Rotorblattanschluss (17) zur Verbindung des Rotorblatts (5) mit einer Rotornabe (4) einer Windenergieanlage (1) unter Verwendung eines Befestigungskörpers (12), wobei der Befestigungskörper (12) zur Anordnung in einer Aufnahme des Rotorblattanschlusses (17) des Rotorblatts (5) vorgesehen ist und wobei die Aufnahme am rotornabenseitigen Ende des, vorzugsweise flanschfreien, Rotorblatts (5) ausgebildet ist, wobei der Befestigungskörper (12) in der Aufnahme zwischen einer inneren Befestigungsseite und einer äußeren Befestigungsseite des Rotorblatts (5) angeordnet wird oder ist und der in der Aufnahme (10) eingebrachte Befestigungskörper (12) mit der inneren Befestigungsseite und der äußeren Befestigungsseite des Rotorblatts (5) verbunden wird oder ist, wobei der Befestigungskörper (12) in seiner Längserstreckung verjüngend ausgebildet ist, wobei der Befestigungskörper (12) quer, insbesondere senkrecht, zur Längserstreckung einen Anschluss (15) für einen Blitzschutzleiter (18) des Rotorblatts (5) aufweist, **dadurch gekennzeichnet, dass** der Befestigungskörper (12) an seiner der Rotorblattinnenseite zugewandten Kopfseite eine Vertiefung, insbesondere Bohrung, zum Aufnehmen eines aus der Kopfseite des Befestigungskörpers (12) vorspringenden Anschlussstückes (15) aufweist, wobei das Anschlussstück (15) mit dem Ende des Blitzschutzleiters (18) verbunden wird oder ist.

2. Rotorblatt (5) nach Anspruch 1, **dadurch gekennzeichnet, dass** der Anschluss (15) an der Innenseite des Rotorblatts (5) angeordnet wird oder ist.

3. Rotorblatt (5) nach Anspruch 1 oder 2, **dadurch gekennzeichnet, dass** der Befestigungskörper (12) und der Anschluss (15) elektrisch leitend sind und/oder aus Metall, vorzugsweise Stahl, bestehen.

4. Rotorblatt (5) nach einem der Ansprüche 1 bis 3, **dadurch gekennzeichnet, dass** der Anschluss (15) eine elektrisch leitende Verbindung zwischen dem im Inneren des Rotorblatts (5) angeordneten Blitzschutzleiter (18) und dem gegenüber dem Blitzschutzleiter (18) isolierten Befestigungskörper (12) ausbildet.

5. Rotorblatt (5) nach einem der Ansprüche 1 bis 4, **dadurch gekennzeichnet, dass** der Anschluss (15) und der Befestigungskörper (12) lösbar miteinander verbunden sind oder werden.

6. Rotorblatt (5) nach einem der Ansprüche 1 bis 5, **dadurch gekennzeichnet, dass** der Befestigungskörper (12) in der Aufnahme (10) des Rotorblatts (5) mit dem Rotorblatt (5) verklebt wird oder ist.

7. Rotorblatt (5) nach einem der Ansprüche 1 bis 6, **dadurch gekennzeichnet, dass** der Befestigungskörper (12) in eine ringförmigen Aufnahme (10) des Rotorblattanschlusses (17) eingesetzt wird oder ist, wobei insbesondere mehrere Befestigungskörper (12) äquidistant ringförmig am Rotorblattanschluss (17) angeordnet sind und wobei insbesondere zwischen zwei Befestigungskörpern (12) jeweils ein Abstandskörper (14) angeordnet ist oder wird.

8. Rotorblatt (5) nach einem der Ansprüche 1 bis 7, **dadurch gekennzeichnet, dass** der Befestigungskörper (12) in Längserstreckung auf der der Rotornabe (4) zugewandten, vorzugsweise quadratischen, Seite eine Bohrung zur Aufnahme (10) eines Bolzens aufweist.

9. Rotorblatt (5) nach einem der Ansprüche 1 bis 8, **dadurch gekennzeichnet, dass** auf der der Rotornabe (4) zugewandten Seite des oder der Befestigungskörper (12) ein Ring, insbesondere ein Blitzschutzring, angeordnet wird oder ist.

10. Verwendung eines Befestigungskörpers (12) in einem Rotorblatt (5) nach einem der Ansprüche 1 bis 9 zum Anordnen in einer Aufnahme (10) eines Rotorblattanschlusses (17) des Rotorblatts (5).

## Claims

1. A rotor blade (5) with a rotor blade connection (17) for connecting the rotor blade (5) to a rotor hub (4) of a wind turbine (1), using an attachment body (12), wherein the attachment body (12) is provided for arrangement in a seat of the rotor blade connection (17) of the rotor blade (5) and wherein the seat is configured at the end on the rotor hub face of the preferably flange-free rotor blade (5), wherein the attachment body (12) becomes or is arranged in the seat between an inside attachment face and an outside attachment face of the rotor blade (5) and the attachment body (12) inserted into the seat (10) becomes or is connected to the inside attachment face and the outside attachment face of the rotor blade (5), wherein the attachment body (12) tapers in its longitudinal extension, wherein the attachment body (12) has, transversely, in particular vertically, to the longitudinal extension, a connection (15) for a lightning conductor (18) of the rotor blade (5), **characterised in that** the attachment body (12) has a depression, in particular a drilled hole, on its head end facing the inside face of the rotor blade, for receiving a connection piece (15) projecting from the head end of the attachment body (12), wherein the connection piece (15) becomes or is connected to the end of the lighting conductor (18).

2. The rotor blade (5) according to claim 1, **characterised in that** the connection (15) becomes or is arranged on the inside face of the rotor blade (5).

3. The rotor blade (5) according to claim 1 or 2, **characterised in that** the attachment body (12) and the connection (15) are electrically conductive and/or made out of metal, preferably out of steel.

4. The rotor blade (5) according to one of claims 1 to 3, **characterised in that** the connection (15) forms an electrically conductive connection between the lightning conductor (18) arranged in the inside of the rotor blade (5) and the insulated attachment body (12) against the lightning conductor (18).

5. The rotor blade (5) according to one of claims 1 to 4, **characterised in that** the connection (15) and the attachment body (12) are or become releasably connected to one another.

6. The rotor blade (5) according to one of claims 1 to 5, **characterised in that** the attachment body (12) becomes or is cemented to the rotor blade (5) in the seat (10) of the rotor blade (5).

7. The rotor blade (5) according to one of claims 1 to 6, **characterised in that** the attachment body (12) becomes or is inserted into a ring-shaped seat (10) of the rotor blade connection (17), wherein in particular several attachment bodies (12) are arranged in a ring shape and equidistantly on the rotor blade connection (17), and, wherein in particular a spacer body (14) becomes or is arranged between each two attachment bodies (12).

8. The rotor blade (5) according to one of claims 1 to 7, **characterised in that** the attachment body (12) has, in longitudinal extension on the preferably square face facing the rotor hub (4), a drilled hole for the seat (10) of a bolt.

9. The rotor blade (5) according to one of claims 1 to 8, **characterised in that**, on the face of the one or more attachment bodies (12), said face facing the rotor hub (4), a band, in particular a lightning protection band, becomes or is arranged.

10. Use of an attachment body (12) in a rotor blade (5) according to one of claims 1 to 9 for the arrangement in a seat (10) of a rotor blade connection (17) of the rotor blade (5).

## Revendications

1. Pale de rotor (5) ayant un raccord (17) de pale de rotor pour le raccordement de la pale de rotor (5) à un moyeu de rotor (4) d'une éolienne (1) en utilisant un élément de fixation (12), ledit élément de fixation (12) étant prévu pour être disposé dans un logement de raccord (17) de pale de rotor que comprend la pale de rotor (5), le logement étant aménagé à une extrémité de la pale de rotor (5) située du côté du moyeu du rotor, de préférence sans bride, l'élément de fixation (12) étant relié ou apte à être relié à la fois à un côté de fixation interne et à un côté de fixation externe de la pale de rotor (5), l'élément de fixation (12) introduit dans le réceptacle (10) étant relié ou apte à être relié au côté de fixation interne et au côté de fixation externe de la pale de rotor (5), l'élément de fixation (12) étant conçu de façon à être effilé selon son extension longitudinale, l'élément de fixation (12) comprenant un connecteur (15) qui est transversal, en particulier perpendiculaire, à l'extension longitudinale pour un conducteur de protection contre la foudre (18) de la pale de rotor (5), **caractérisé en ce que** l'élément de fixation (12) comprend un évidement, en particulier un alésage, sur son côté de tête tourné vers le côté intérieur de la pale de rotor pour recevoir le connecteur (15) faisant saillie du côté de tête de l'élément de fixation (12), le connecteur (15) étant relié ou apte à être relié à l'extrémité du conducteur (18) de protection contre la foudre.

2. Pale de rotor (5) selon la revendication 1, **caractérisé en ce que** le connecteur (15) est agencé ou apte à être agencé sur la face interne de la pale de rotor (5).

3. Pale de rotor (5) selon la revendication 1 ou la revendication 2, **caractérisé en ce que** l'élément de fixation et le connecteur (15) sont électriquement conducteurs et / ou en métal, de préférence en acier.

4. Pale de rotor (5) selon l'une quelconque des revendications 1 à 3, **caractérisé en ce que** le connecteur (15) forme une connexion conductrice électriquement conductrice entre le conducteur (18) de protection contre la foudre qui est agencé entre l'intérieur de la pale de rotor (5) et l'élément de fixation (12), qui est isolé par rapport au conducteur (18) de protection contre la foudre.

5. Pale de rotor (5) selon l'une quelconque des revendications 1 à 4, **caractérisé en ce que** le connecteur (15) et l'élément de fixation (12) sont reliés ou aptes à être reliés de façon détachable l'un à l'autre.

6. Pale de rotor (5) selon l'une quelconque des revendications 1 à 5, **caractérisé en ce que** l'élément de fixation (12) est collé ou apte à être collé à la pale de rotor (5) dans le logement (10) de pale de rotor (5).

7. Pale de rotor (5) selon l'une quelconque des revendications 1 à 6, **caractérisé en ce que** l'élément de fixation (12) est inséré ou apte à être inséré dans un réceptacle (10) de forme annulaire que comprend le raccord (17) de pale de rotor, en particulier dans lequel une pluralité d'éléments de fixation (12) sont disposés de façon équidistante sur la circonférence du raccord (17) de pale de rotor, et en particulier dans lequel un élément d'écartement (14) est disposé ou apte à être disposé entre deux éléments de fixation (12).

8. Pale de rotor (5) selon l'une quelconque des revendications 1 à 7, **caractérisé en ce que** l'élément de fixation (12) comprend, dans la direction longitudinale, sur le côté tourné vers le moyeu de rotor (4) un alésage pour le réceptacle (10), de réception d'un boulon, de préférence carrée.

9. Pale de rotor (5) selon l'une quelconque des revendications 1 à 8, **caractérisé en ce qu'**un anneau est disposé ou apte à être disposé sur le côté de l'élément de fixation (12) faisant face au moyeu de rotor (4), en particulier un anneau de protection contre la foudre.

10. Utilisation d'un élément de fixation (12) dans une pale de rotor (5) selon l'une quelconque des revendications 1 à 9, pour un agencement dans un réceptacle (10) d'un raccord (17) de pale de rotor d'une pale de rotor (5).
